Europäisches Patentamt

European Patent Office

Office européen des brevets

(19)

(11) Veröffentlichungsnummer : **0 570 338 B1**

(12) **EUROPÄISCHE PATENTSCHRIFT**

(45) Veröffentlichungstag der Patentschrift :
**16.08.95 Patentblatt 95/33**

(51) Int. Cl.⁶ : **H04L 12/40, H04L 12/26, H04L 12/22**

(21) Anmeldenummer : **93810330.6**

(22) Anmeldetag : **05.05.93**

(54) **Verfahren und Einrichtung zur Zugriffsüberwachung und zum Zugriffsschutz in Kommunikationsnetzwerken.**

(30) Priorität : **15.05.92 CH 1560/92**
**16.06.92 CH 1893/92**

(43) Veröffentlichungstag der Anmeldung :
**18.11.93 Patentblatt 93/46**

(45) Bekanntmachung des Hinweises auf die Patenterteilung :
**16.08.95 Patentblatt 95/33**

(84) Benannte Vertragsstaaten :
**AT BE CH DE ES FR GB IT LI NL PT SE**

(56) Entgegenhaltungen :
**EP-A- 0 431 751**

(56) Entgegenhaltungen :
**ELEKTRONIK. Bd. 38, Nr. 17, 18. August 1989, MUNCHEN DE Seiten 93 - 96 K.SCHWAIGER ET AL. 'Die Vielfalt der Daten bündeln' ELEKTRONIK. Bd. 38, Nr. 25, 8. Dezember 1989, MUNCHEN DE Seiten 79 - 83 K.ET-SCHBERGER ET AL. 'Buscontrollerbaustein für echtzeitfähige Netze'**

(73) Patentinhaber : **Gut, Max B., Dipl.-Ing. ETH Ahornweg 15 CH-6353 Weggis (CH)**

(72) Erfinder : **Gut, Max B., Dipl.-Ing. ETH Ahornweg 15 CH-6353 Weggis (CH)**

(74) Vertreter : **OK pat AG Hinterbergstrasse 36, Postfach 5254 CH-6330 Cham (CH)**

## Beschreibung

Die Erfindung betrifft ein Verfahren und eine Einrichtung zur Zugriffsüberwachung und zum Zugriffsschutz in Kommunikationsnetzwerken, wobei über das Netzwerk Informationen in Form von Telegrammen übertragen werden und ein bestimmter Teil der im Telegramm enthaltenen Information für die Ueberprüfung des Zugriffrechtes auf den Telegrammempfänger verwendet wird.

Kommunikationsnetzwerke dieser Art, auch "local area networks" (LAN) genannt, verknüpfen räumlich relativ eng benachbarte, mehr oder weniger intelligente elektronische Systeme miteinander, so dass eine Kommunikation dieser Systeme untereinander ermöglicht wird. Zu diesem Zweck werden Informationen Bit-seriell in Form von Telegrammen über Leitungen des Netzwerkes übertragen, wobei die Informationen ausgehend von einer Informationsquelle an eine oder mehrere Informationssenken gesendet werden, mittels welchen aufgrund der empfangenen Informationen bestimmte Aktionen, auch "services" genannt, ausgelöst werden.

Entsprechend der Verschiedenheit der Verwendungszwecke von LAN's, wie beispielsweise für den Verbund von Rechnersystemen und deren Peripheriegeräten (EDV) oder für den Einsatz in der Prozessautomation (Steuertechnik), ergeben sich charakteristische Unterschiede bezüglich der Netzwerkteilnehmer, der übertragenen Information sowie deren Schutz vor absichtlichem oder unbeabsichtigtem Missbrauch.

In Netzwerken der EDV sind die Netzwerkteilnehmer Rechner, Terminals, Peripheriegeräte usw. Die über das Netzwerk übertragene Informationsmenge pro übertragenes Informationspaket ist gross, aber selten zeitkritisch. Eingesetzte Schutzmassnahmen sollen den absichtlichen Missbrauch übertragener Information an sich und die Benutzung unerlaubter Services und Funktionen durch nicht autorisierte Teilnehmer verhindern. Aufgrund aktiver und absichtlicher Missbrauchversuche muss einem geeigneten (starken) Schutzsystem die "Basis des Misstrauens" zugrunde liegen. Die benötigten Schutzmassnahmen sind damit umfangreich und aufwendig. In LAN's für EDV sind bei den Netzwerkteilnehmern meist genügend Resourcen verfügbar, um diese zusätzlichen Aufgaben, auch zeitgerecht, vernünftig lösen zu können.

In Netzwerken dagegen, die vorwiegend der Steuerungstechnik dienen, sind die Netzwerkteilnehmer Sensoren, Aktuatoren und Steuersysteme. Die über das Netzwerk übertragene Information besteht meist aus kurzen Telegrammen mit geringer Informationsvielfalt, die aber potentiell zeitkritisch ist. Schutzmassnahmen sind selten eingesetzt. Sie dienen vor allem dem Schutz vor unbeabsichtigter Fehlmanipulation und weniger dem Schutz vor bewusst missbräuchlicher Verwendung der übertragenen Information oder der angebotenen Services und Funktionen. Ein Schutz vor solchem Missbrauch kann deshalb ein schwacher sein, eher auf der "Grundlage des Vertrauens" basieren und damit einfacher ausgestaltet werden. Bekannte Schutzmechanismen, in einfachster Ausführung, überprüfen die Berechtigung eines bestimmten Busteilnehmers, einen bestimmten anderen Busteilnehmer ansprechen zu können (access control), sowie die Berechtigung dieses Teilnehmers, eine bestimmte Aktion beim Empfänger auslösen zu können. Die einzelnen Netzwerkteilnehmer verfügen aber oft auch nicht über genügend Resourcen, um einen vollständigen Schutz zeitgerecht und umfassend zu gewährleisten.

Infolge zunehmender Verknüpfung von Netzwerken für die Steuerungstechnik mit vorwiegend EDV-orientierten Netzwerken über irgendwelche Arten von Buskopplern, immer universelleren Bedienungseinheiten und komplexeren Netzwerken ist indessen ein gesteigertes Risiko unbeabsichtigter Befehlsausführungen mit direkten Schadenfolgen festzustellen. Deshalb ist ein vermehrter Bedarf an Schutzmassnahmen auch bei Netzwerken für die Steuerungstechnik gegeben.

Bei einem bekannten Verfahren ("Profibus", DIN 19245) wird zwecks Ueberprüfung der Zugriffsrechte ein Teil der im übermittelten Telegramm enthaltenen Information sowie zusätzlich eine beim Busteilnehmer abgespeicherte Information verwendet. Hierbei wird aus dem Telegramm der Absender, der Adressat, sowie die verlangte auszuführende Aktion extrahiert. Die für den Zugriffsschutz bei jedem Busteilnehmer abgespeicherte Information ist eine Tabelle, in welcher bezogen auf jeden möglichen Teilnehmer für jede mögliche anforderbare Aktion, die Zugriffsrechte definiert sind. Anhand der in der Tabelle enthaltenen Daten wie Passwörter, Zugriffsgruppen, Zugriffsrechte und Indexe, kann bei Eintreffen eines Telegrammes die Zugriffsberechtigung eines Busteilnehmers für die Ausführung der gewünschten Aktion ermittelt werden. Das Resultat der Prüfung dieser Tabelle ist entweder die Zugriffsberechtigung oder die Zugriffsverweigerung, wobei die Ausführung der gewünschten Aktion oder die Zurückweisung der Aufforderung zur Aktion ausgelöst wird.

Bei diesem bekannten Verfahren ist als nachteilig anzusehen, dass die zur Ueberprüfung notwendige und nicht im Telegramm enthaltene Information bei jedem Adressaten gespeichert sein muss, was Speicherplatz und Rechenzeit für die Bearbeitung benötigt. Weiterhin kann bezüglich Informationskonsistenz die inhaltliche und örtliche Verteilung der Information für die Zutrittsberechtigung auf verschiedene Tabellen und ihre teilweise Duplizierung zu Schwierigkeiten führen. Ausserdem kann bei einfachen Busteilnehmern mit wenig frei verfügbarer Speicherkapazität selbst ein einfacher Passwortschutz oder eine Ueberprüfung der Zugriffsrechte nach obigem Verfahren kaum verwirklicht werden.

Neben dem vorgenannten Verfahren ("Profibus") existieren andererseits zur ausschliesslichen Sicherung korrekter Datenübermittlung eine Vielzahl von Methoden, um anhand von zusätzlich in das Telegramm eingebauter Redundanz Uebermittlungsfehler erkennbar zu machen. Erkannte Fehler können dabei im einfachsten Fall lediglich für die Fehlermeldung verwendet werden, im weiteren jedoch auch für die Fehlerkorrektur. Während im einfachsten Fall jeder Empfänger die Fehler-Ueberprüfung selbst durchführt, ist auch ein sogenannter Instrumentierungsbus ("I-Bus") vorgeschlagen worden (ELEKTRONIK, Vol. 38, Nr. 17, 18. August 1989, München, Seiten 93-96; K. SCHWAIGER et al.: 'Die Vielfalt der Daten bündeln'); mit dem "I-Bus" soll bei der Datenübermittlung zwischen Baugruppen innerhalb eines Kraftfahrzeugs eine zusätzliche Erhöhung der Daten-Uebermittlungssicherheit erreicht werden. Hierzu überprüfen auch andere Busteilnehmer Telegramme, die nicht an sie adressiert sind, anhand der Parity-Bits und des Checksummen-Bytes auf korrekte Uebermittlung; ein als fehlerhaft erkanntes Telegramm wird mittels eines Störsignals (break signal) als generell ungültig erklärt. Beim I-Bus ist damit jedoch das Problem einer Ueberwachung der Zugriffsberechtigung weder angesprochen noch gelöst.

Im weiteren ist eine Anordnung eines LAN's bekannt (**EP-A-0431 751**) bei welchem in der Nähe der DTE's Repeater vorgesehen sind und dort ein partieller Zugriffsschutz installiert ist. Dabei ist vorgesehen, dass an den einzelnen Repeatern unterschiedliche Zugriffsregeln gespeichert sind. Im übrigen wird im System, das in diesem Dokument offenbart ist, versucht, die komplexeren Bridges durch einfachere Repeater zu ersetzen. Es wird aber im Sinne der vorliegenden Problemstellung als nachteilig angesehen, dass durch diese Art der Systemarchitektur keinerlei Reduktionen des Speicherplatzes bei den einzelnen Kommunikatonsteilnehmern erreicht wird, noch wird die Rechenzeit, die für die Ueberprüfung der Zutrittsberechtigung notwendig ist, reduziert. Es findet lediglich eine Verlagerung der Zugriffsschutztabellen statt. Zudem findet keine Authentizitätsprüfung statt. Damit eignet sich ein solches System eher zum Einsatz in EDV-Anlagen, wo die Kenntnisse der übertragenen Daten eine zentrale Rolle spielen. In Steuerungsnetzen geht es vielmehr um das nicht autorisierte Schalten, Regeln und Steuern von Aktuatoren und nicht um die Kenntnis der kommunizierten Daten. Diese Daten dürfen damit und sollen auch bekannt bleiben. Hingegen soll allgemein eruierbar sein, welche Absicht der "Eindringling" hatte. Was aber absolut verhindert werden muss, ist die Auslösung der Wirkung der Informations-Uebertragung.

Der vorliegenden Erfindung liegt die Aufgabe zugrunde, ein Verfahren der eingangs genannten Art sowie eine Einrichtung zur Durchführung des Verfahrens vorzuschlagen, bei welchem die Busteilnehmer für die Ueberprüfung der Zugriffsrechte keine zusätzliche Speicherkapazität und keine Rechenzeit für die Bearbeitung benötigen.

Diese Aufgabe wird durch die in den Patentansprüchen 1 und 18 gekennzeichnete Erfindung gelöst. Hierbei wird der Telegrammverkehr im gesamten Netzwerk von einer zentralen Ueberwachungseinrichtung ständig abgehört. In der zentralen Ueberwachungseinrichtung ist eine Tabelle gespeichert, wobei bei Auftreten eines Telegrammes die zentrale Ueberwachungseinrichtung anhand von Daten der Tabelle und eines bestimmten Teiles der im Telegramm enthaltenen Information das Zugriffsrecht des Telegrammabsenders auf den Telegrammempfänger überprüft und im Falle des unstatthaften Zugriffes veranlasst, dass das Telegramm unwirksam gemacht wird.

Die mit der Erfindung erzielten Vorteile liegen insbesondere darin, dass der Zugriffsschutz zentral durchgeführt werden kann und somit für das ganze System nur eine Tabelle benötigt wird. Daraus resultiert, dass kein nennenswerter zusätzlicher Speicherplatzbedarf an den Kommunikationsendpunkten besteht und letztere während der Zugriffsüberprüfung andere Operationen durchführen können. Ein weiterer Vorteil ist darin zu sehen, dass eine vorausbestimmbare, feste Wartezeit im System eingeplant werden kann.

Im folgenden wird die Erfindung anhand von Ausführungsbeispielen in Verbindung mit der Zeichnung näher erläutert.

Es zeigen:

| | |
|---|---|
| Fig. 1 | ein Blockschema der Struktur eines Kommunikationsnetzwerkes für die Steuerungstechnik, |
| Fig. 2 | ein Diagramm der Zugriffszeitpunkte mehrerer Stationen auf einen Bus des Kommunikationsnetzwerkes, |
| Fig. 3a bis 3d | graphische Darstellungen von Definitionen einer Informationsübertragung, nämlich Fig.3a eine Zeichendefinition, Fig.3b eine Telegrammdefinition und Fig.3c eine Telegrammfelddefinition zu einem ersten Ausführungsbeispiel, und Fig. 3d eine Telegrammfelddefinition mit zugehöriger Zeichendefinition eines Accessfeldes zu einer Verfahrensvariante, |
| Fig. 4a | ein Zeitdiagramm eines erlaubten Zugriffes und |
| Fig. 4b | eines unerlaubten Zugriffes auf den Bus des Kommunikationsnetzwerkes gemäss dem ersten Beispiel, |

Fig. 5a, 5b      Flussdiagramme von Ueberwachungsvorgängen bei der Ueberprüfung der Zugriffsberechtigung zum Beispiel nach Fig. 4a, 4b,

Fig. 6      ein vereinfachtes Schema zur Erläuterung der "wired or"-Verknüpfung über einen Bus, und

Fig. 7a, 7b      Zeitdiagramme analog den Fig. 4a, 4b eines erlaubten bzw. eines unerlaubten Zugriffes bei der Verfahrensvariante in Verbindung mit den Definitionen nach Fig. 3d.

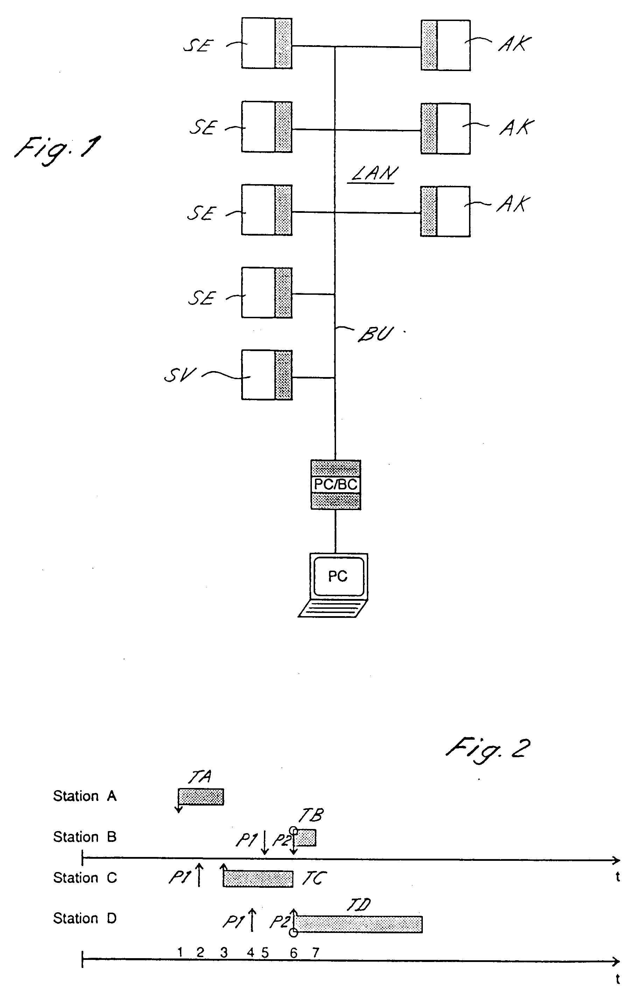

In der Fig.1 sind mit SE Sensoren und mit AK Aktuatoren bezeichnet, die beispielsweise intelligente, elektronische Systeme sein können. Die Sensoren SE und Aktuatoren AK sind über einen Bus BU eines Netzwerkes LAN miteinander verbunden, über welchen Informationen Bit-seriell in Form von Telegrammen übertragen werden. Da im gewählten Beispiel die Telegramme von den Sensoren SE abgesendet und von den Aktuatoren AK empfangen werden, werden im folgenden auch die Bezeichnungen "Telegrammabsender" und "Telegrammempfänger" verwendet. Eine den Telegrammverkehr im gesamten Netzwerk LAN ständig abhörende zentrale Ueberwachungseinrichtung SV, auch "Supervisor" genannt, ist am Bus BU angeschlossen. Im Supervisor SV sind Daten in Form einer Tabelle gespeichert, mittels welchen der Supervisor SV unter Verwendung eines Teiles eines gesendeten Telegrammes die Zugriffsberechtigung des Telegrammabsenders auf einen Telegrammempfänger überprüfen kann. Mit PC ist ein universelles Bedienungsgerät bezeichnet, das über einen Buskoppler PC/BC mit dem Bus BU in Verbindung steht, und das jede Art von Informationen in das Netzwerk LAN einspeisen und auch von dort empfangen kann.

Gemäss Fig.2 sind mit TA, TB, TC und TD Telegramme bezeichnet, die von Stationen A, B, C und D ausgesendet werden. Pfeile P1 symbolisieren Zugriffsabsichten, während Pfeile P2 mögliche Kollisionen symbolisieren. Der dargestellten Zugriffssituation wurde beispielsweise das Busprotokoll CSMA/CA (Carrier sense multiple access, collision avoidance) zugrunde gelegt. Mit diesem Protokoll wird sichergestellt, dass Telegramme nur zeitlich gestaffelt, also ohne gegenseitige Ueberlagerung und Störung, übertragen werden können.

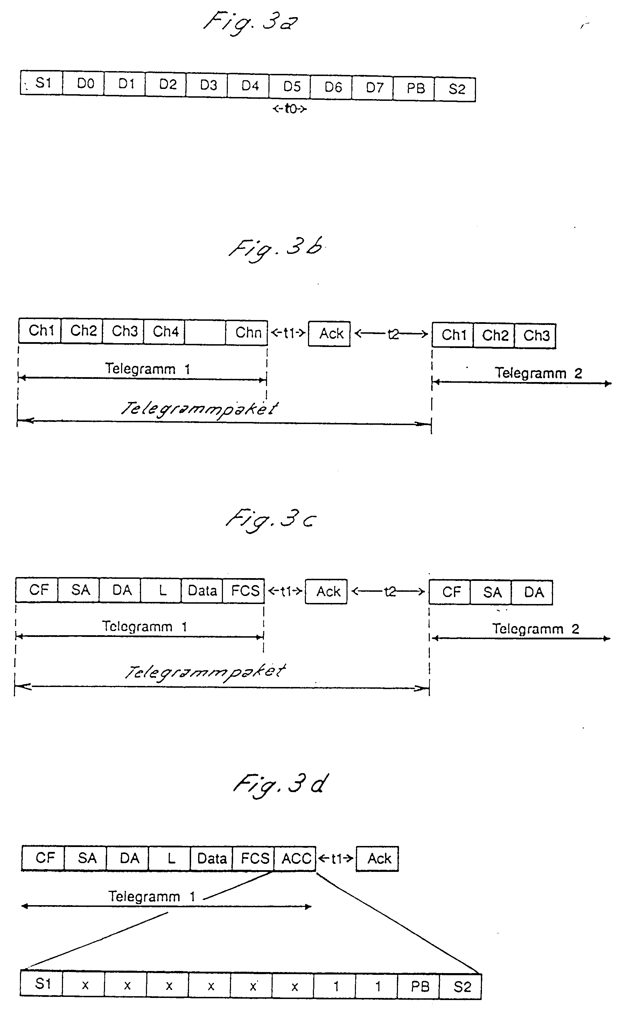

In der Fig.3a bedeuten, wie an sich bekannt, S1 ein Startbit, DO-D7 acht Datenbits, PB ein Paritätsbit und S2 ein Stopbit. Für die nachfolgenden Angaben sei eine Uebertragungsgeschwindigkeit von 9600 Baud und eine Bitdauer von $t0 = 104$ $\mu$s angenommen.

In der Fig.3b bedeuten Ch1-Chn die beispielsweise gemäss Fig.3a definierten Zeichen (characters), Ack die Telegrammbestätigung (8 Bit), t1 die Minimalzeit zwischen dem Ende eines Telegrammes 1 und der Telegrammbestätigung Ack, und t2 die Minimalzeit zwischen der Telegrammbestätigung Ack und einem folgenden Telegramm 2. Hierbei ist z.B. t1 auf 200 $\mu$s und t2 auf 5 ms festgesetzt. Unter Telegramm 1 ist ein Befehlstelegramm für eine angeforderte Aktion, und unter Telegramm 2 ein Löschtelegramm bei unstatthaftem Zugriff zu verstehen.

Gemäss der Felddefinition nach Fig.3c ist mit CF ein Kontrollfeld (8 Bit), mit SA die Absenderadresse (16 Bit), mit DA die Empfängeradresse (16 Bit) mit L die Länge (8 Bit), mit Data das Datenfeld (8 Bit) und mit FCS das Prüfbyte (8 Bit) bezeichnet.

Die vorstehend beschriebene Einrichtung nach Fig. 1 arbeitet bei einem Buszugriff gemäss Fig.2 wie folgt (beruhend auf der für LAN's mit Busstruktur charakteristischen Eigenschaft, dass alle Busteilnehmer jederzeit alle auf dem Bus übertragenen Informationen "mithören" können):

Beabsichtigt Station A ein Telegramm TA zu übermitteln, so hört sie vorerst auf dem Bus BU mit und stellt fest, ob der Bus BU durch eine andere Uebertragung bereits belegt ist (Zeitpunkt 1). Stellt sie fest, dass der Bus frei ist, sendet sie ihr Telegramm TA. Beabsichtigt während dessen Dauer eine andere Station (Station C) ebenfalls ein Telegramm TC zu übermitteln, so stellt diese fest, dass der Bus BU belegt ist (Zeitpunkt 2). Sie wartet daher mit der Uebermittlung, bis der Bus wieder frei ist (Zeitpunkt 3).

Beabsichtigen nun mehrere Stationen (D und B) während der Uebermittlung eines Telegrammes TC durch eine andere Station (C) selbst ein Telegramm TD, TB zu senden (Zeitpunkte 4, 5), so wird ihr Zugriffsversuch durch die Freigabe des Bus BU (Zeitpunkt 6) quasi synchronisiert: Beide Stationen hören auf dem Bus nichts mehr und beginnen somit gleichzeitig mit dem Senden ihrer Telegramme TD, TB (Zeitpunkt 6). Während dem Aussenden der Telegramme TD, TB hören aber beide Stationen mit, ob die Information, die sie ausgesendet haben, mit der Information, die sie hören, übereinstimmt. Sobald das Gehörte nicht mehr mit dem Gesendeten übereinstimmt, beenden sie unmittelbar die Sendung und versuchen einen neuen Zugriff erst, wenn der Bus wieder frei ist (Zeitpunkt 7, Station B).

Wird durch das Netzwerk sichergestellt, dass gleichzeitig mehrere Stationen störungsfrei senden können (z.B.: "wired or"-Verknüpfung), so wird die eine Station (Station D, Zeitpunkt 7) nicht feststellen können, dass weitere Stationen (Station B, Zeitdauer 6-7) gleichzeitig (aber das gleiche) gesendet haben. Sie wird mit der Telegrammübermittlung daher unbeschadet weiterfahren. Damit hatte faktisch Station D gegenüber Station B die höhere Priorität. Wird die senderseitige Adresse als erstes innerhalb des Telegrammes ausgesendet, kann aufgrund der Busteilnehmeradresse die Priorität verteilt und bestimmt werden.

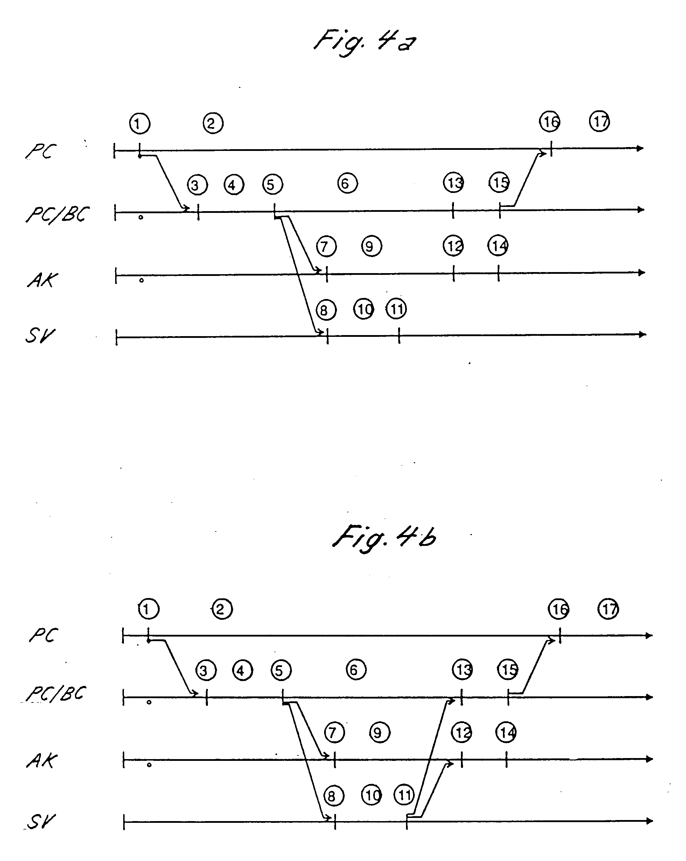

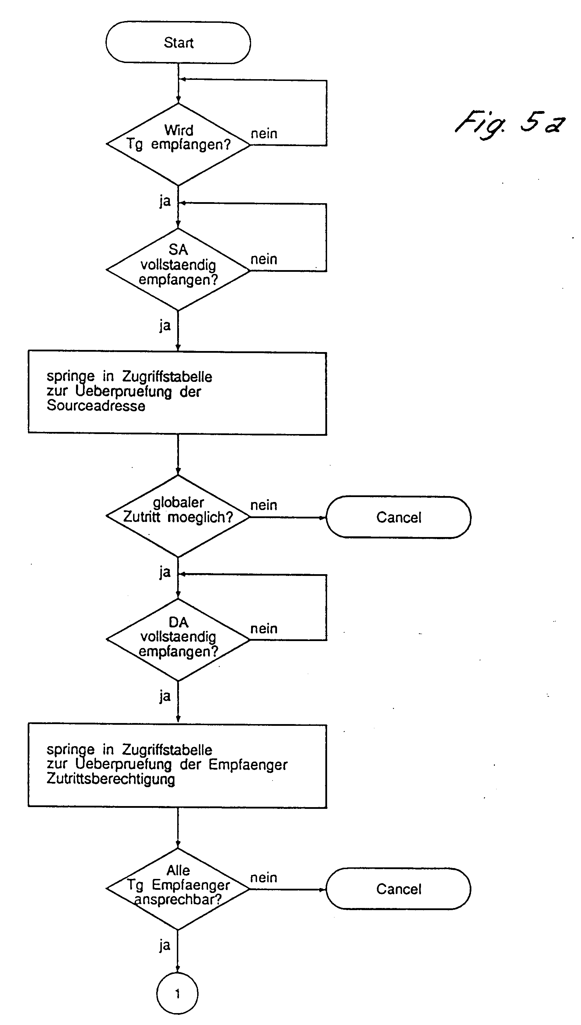

Nachstehend wird - ausgehend von den Definitionen nach Fig. 3a bis 3c - die Ueberprüfung der Zugriffsberechtigung mittels der zentralen Ueberwachungseinrichtung SV anhand der Zeitdiagramme Fig. 4a, 4b und der Flussdiagramme Fig. 5a, 5b beschrieben, unter der beispielsweisen Annahme, dass das universelle Bedienungsgerät PC ein Telegramm sendet, welches eine Aktion auslösen soll:

Das Bedienunsgerät PC sendet einen Schaltbefehl in Form eines Telegrammes und wartet dann auf dessen Quittierung (Zeitpunkt 1, Zeitdauer 2). Der Buskoppler PC/BC empfängt zum Zeitpunkt 3 das Telegramm, übersetzt es während der Zeit 4 in eine für die Uebertragung im Netzwerk LAN geeignete Form und speist es zum Zeitpunkt 5 in das Netzwerk ein. Während der Zeit 6 wartet der Buskoppler PC/BC auf ein Quittierungs- oder ein Löschtelegramm. Zu den Zeitpunkten 7, 8 empfangen der adressierte Aktuator AK und der Supervisor SV das Befehlstelegramm, worauf der Aktuator AK während der Zeit 9 auf das Löschtelegramm wartet und der Supervisor SV während der Zeit 10 das Zugriffsrecht überprüft. Da der Supervisor SV alle ausgesendeten Telegramme mithört, kann er noch während der Telegrammübermittlung anhand der übermittelten Adresse und angeforderten Funktion sowie der bei ihm zentral gespeicherten Tabelle mit der Ueberprüfung der Zugriffsrechte beginnen, so dass am Ende des Telegrammpaketes (Fig. 3b, 3c) die Zugriffsberechtigung bereits feststehen kann. Hierbei hat der Supervisor SV spätestens zu Beginn des Prüfbytes FCS (Fig.3c) alle nötigen Informationen zur Verfügung und kann zu diesem Zeitpunkt mit der Ueberprüfung beginnen. Gemäss den Definitionen der Fig.3a-3c kann daher der Supervisor SV frühestens nach einer Zeit

$$tx = 1 \text{ Zeichen} + t1 + 1 \text{ Zeichen} + t2, \text{ d.h. } 11 \cdot 104\mu s + 200\mu s + 11 \cdot 104\mu s + 5ms = 7488\mu s$$

ein Löschtelegramm absenden. Diese Zeit hat der Supervisor SV für die Ueberprüfung zur Verfügung. Arbeitet er beispielsweise mit einer Instruktionszykluszeit von 1 $\mu s$, so kann er in dieser Zeit ungefähr 7400 Instruktionen abarbeiten.

Nun sei angenommen, dass die Ueberprüfung die Berechtigung des Zugriffes bestätigt (Zeitpunkt 11, Fig.4a). Zu diesem Zeitpunkt wird daher der Supervisor SV kein Löschtelegramm absenden, so dass im Zeitpunkt 14 (nach dem Warten auf das ausgebliebene Löschtelegramm) der Aktuator AK den mit dem Befehlstelegramm übermittelten Befehl ausführt. Im Zeitpunkt 15 sendet der Buskoppler PC/BC ein Quittierungstelegramm an das Bedienungsgerät PC, das dieses zum Zeitpunkt 16 empfängt und eine entsprechende Antwort während der Zeit 17 auf einem Display darstellt.

Stellt der Supervisor SV bei der Ueberprüfung jedoch fest, dass der Zugriff nicht berechtigt ist, so sendet er im Zeitpunkt 11 (Fig.4b) ein Löschtelegramm, das der Aktuator AK im Zeitpunkt 12 empfängt und daraufhin die Befehlsausführung storniert. Im Zeitpunkt 13 empfängt auch der Buskoppler PC/BC das Löschtelegramm und sendet in der Folge zum Zeitpunkt 15 ein Passwort-Fehlertelegramm an das Bedienungsgerät PC, welches das Fehlertelegramm im Zeitpunkt 16 empfängt und eine entsprechende Antwort während der Zeit 17 auf dem Display darstellt.

Um Zeit für die Ueberprüfung des Zugriffsrechtes zu gewinnen, wird die im Supervisor SV gespeicherte Tabelle mit Vorteil in der gleichen Reihenfolge organisiert wie die Telegrammfelder (Fig.3c). Gemäss den Fig.5a, 5b, anhand welcher die Ueberprüfung während der Zeit 10 (Fig.4a, 4b) näher dargestellt wird, kann hierbei der Supervisor SV schon bei Empfang der Absenderadresse SA die globale Zugriffsberechtigung überprüfen. Beim nachfolgenden Empfang der Empfängeradresse DA kann bereits die Empfänger-Zugriffsberechtigung und anschliessend, nach Empfang des Datenfeldes Data, die angeforderte Aktion überprüft werden. Bei fehlerhaftem Prüfbyte FCS sendet der Supervisor SV ein "not acknowledge" (NAK) als Telegrammbestätigung aus und leitet damit die Telegrammwiederholung ein. In dieser Situation wird er selbst bei falschem Zugriffsversuch kein Löschtelegramm aussenden. Empfängt er jedoch selbst auf ein überprüftes Telegramm ein "NAK", so wartet er auch hier die Telegrammwiederholung ab und sendet kein Löschtelegramm.

Da ein Telegrammempfänger nach dem Aussenden der Telegrammbestätigung Ack mindestens eine ganze Telegrammpaketdauer warten muss, bis er mit der Befehlsausführung beginnen kann, ist es vorteilhaft, das Löschtelegramm möglichst kurz zu halten. Das kann dadurch erreicht werden, dass neben dem Kontrollfeld CF und dem Prüfbyte FCS keine weiteren Informationen mehr übermittelt werden.

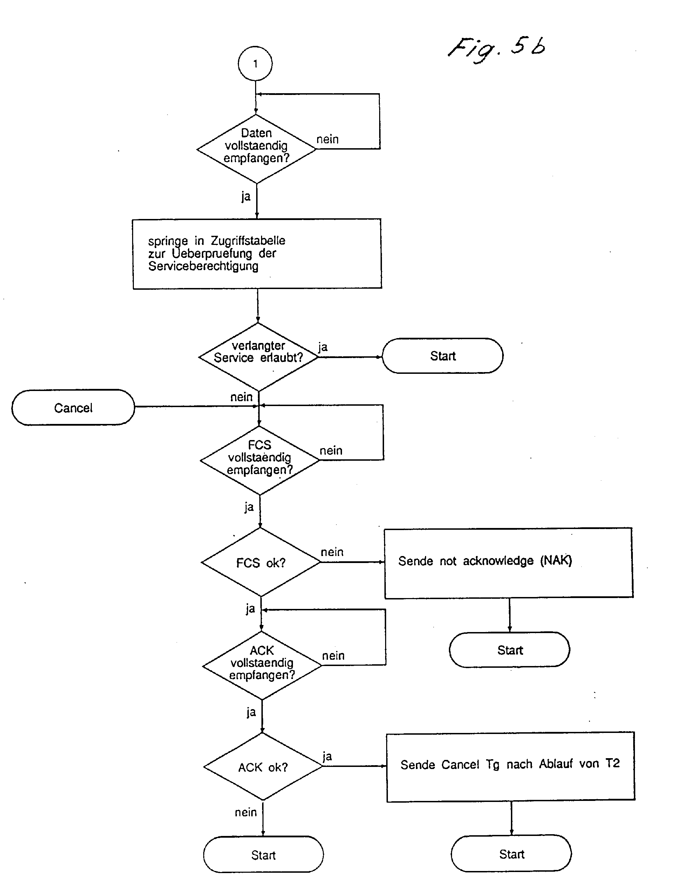

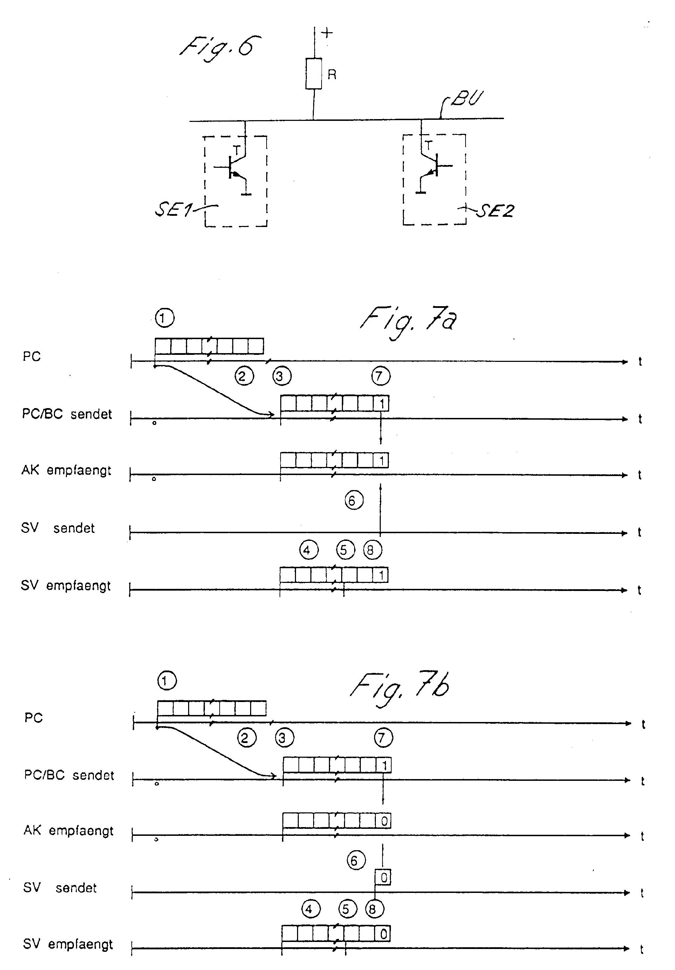

Ist der Supervisor SV indessen noch schneller und kann er schon vor Ende des zu überprüfenden Telegrammes die Zugriffsberechtigung definitiv bestimmen, so kann er unter dem weiter vorn genannten CSMA/CA-Protokoll (im Netzwerk können mehrere Stationen störungsfrei senden) das zu überprüfende Telegramm bei unstatthaftem Zugriffsversuch selbst beeinflussen bzw. unwirksam machen. Eine solche Verfahrensvariante wird nachstehend - vorerst anhand der Fig. 6, 7a und 7b - beschrieben.

Der Supervisor macht zu diesem Zweck von der "wired or"-Verknüpfung Gebrauch und beeinflusst ein oder mehrere Bits, die beeinflussbar sind. Dies sei anhand von Fig. 6 schematisch erläutert:

Wenn logisch 0 auf dem Bus zu übermitteln ist, wird in der betreffenden Station SE ein mit dem Bus BU verbundener Transistor T leitend geschaltet. Soll hingegen logisch 1 übermittelt werden, darf kein Transistor T leitend sein. Wenn zwei Busteilnehmer SE1, SE2 zeitgleich die gleiche Information übermitteln wollen, so erscheint auf dem Bus diese Information unverfälscht, obwohl beide Busteilnehmer "ihre" Information (aber die gleiche) aktiv übermitteln. Senden jedoch die Busteilnehmer nicht die gleiche Information, so wird in dieser Schaltung die logische 0 des einen Busteilnehmers dominant sein gegenüber der logischen 1 des anderen Busteilnehmers. Auf dem Bus erscheint somit logisch 0 und nicht logisch 1, d.h. der Busteilnehmer mit logisch 0 "überschreibt" damit die logische 1 des anderen Busteilnehmers.

Dieser Effekt kann zur Beeinflussung bzw. "Verfälschung" eines laufenden Telegrammes durch den Supervisor SV benutzt werden (Fig. 7a und 7b): Der Supervisor schreibt bei Nichtberechtigung des Zugriffes eine logische 0 in eine Bitzelle des überprüften Telegrammes, deren Inhalt nach Definition eine logische 1 sein muss (beispielsweise Stopbit eines Zeichens).

Der Telegrammempfänger überprüft die Telegrammübermittlung anhand z.B. des Paritätsbits PB oder eines Prüfbytes (Framing Check FCS) und stellt aufgrund der Intervention des Supervisors einen scheinbaren Uebermittlungsfehler fest. Er antwortet darum mit einem "not acknowledge", worauf der Telegrammabsender das Telegramm wiederholt. Der Supervisor wird auch dieses Telegramm wiederum verfälschen, worauf der Telegrammempfänger ebenso ein weiteres "not acknowledge" zurückmeldet. Nach einer bestimmten, vorgegebenen Anzahl Telegrammwiederholungen stellt der Telegrammabsender die Uebermittlungsversuche ein und setzt eine Fehlermeldung ab. Damit wurde der fehlerhafte Zugriff erfolgreich vereitelt.

Im Gegensatz zum Aussenden eines Löschtelegrammes wie beim vorangehenden Beispiel muss im vorgenannten Fall bei keinem Telegrammempfänger ein zusätzlicher Algorithmus für die Bearbeitung des Löschtelegrammes implementiert werden. Ein korrekt empfangenes Telegramm kann sofort ausgeführt werden. Nachteilig kann hingegen die zusätzliche Busbelastung sein, die durch die Telegrammwiederholung entsteht.

Wird jedoch in der Telegrammdefinition ein spezielles Feld für den Zugriffsschutz reserviert, so kann der Busteilnehmer jeweils eine Ueberprüfung dieses Feldes durchführen und im Fehlerfall zwischen einem Uebermittlungs- oder Framing-Fehler einerseits und einem Zugriffsfehler andererseits unterscheiden, so dass eine Telegrammwiederholung vermieden werden kann. Dies wird im folgenden anhand eines Beispiels nach Fig. 3d illustriert.

Das Telegramm nach Fig. 3c wird entsprechend Fig. 3d mit einem Accessfeld ACC erweitert. In diesem sind zwei Bit-Stellen - gemäss Beispiel diejenigen, welche dem Paritätsbit PB vorangehen - als logisch 1 definiert. Der Supervisor kann nun bei festgestelltem Zugriffsfehler aufgrund der "wired or"-Verknüpfung nach Fig. 6 zwei Bits von logisch 1 auf logisch 0 setzen, wobei das Paritätsbit bei der Ueberprüfung im Empfänger korrekt erscheint und kein Framing-Fehler festgestellt wird. Der Telegrammempfänger überprüft aber auch die genannten zwei Bitstellen und erkennt, falls sie gemeinsam auf logisch 0 gesetzt sind, eine Zugriffsverletzung und unterlässt dementsprechend die Befehlsausführung.

Die Bedeutung der in den Zeitdiagrammen Fig. 7a und 7b eingetragenen, mit Nummern bezeichneten Ereignisse ist wie folgt (siehe auch Fig. 1):

(1) Telegramm (Tg) wird von PC nach PC/BC gesendet

(2) BC/BC übersetzt Tg und bereitet es für die Uebermittlung auf dem Bus vor

(3) BC/BC übermittelt übersetztes Tg auf dem Bus

(4) SV überprüft während dem Empfang die Zugriffsrechte

(5) die Zugriffsberechtigung ist nun bekannt

(6) SV wartet die Stelle des Tg ab, wo das Tg beeinflusst (überschrieben) werden kann

(7) an dieser Stelle hat das Tg ein überschreibbares Bit

(8) bei unstatthaftem Zugriff überschreibt SV dieses Bit

Um zu vermeiden, dass bei Ausfall des Supervisors SV der Zugriff global ermöglicht wird, kann der Supervisor SV periodisch ein Signal an alle Kommunikationsteilnehmer aussenden, wodurch letzteren bestätigt wird, dass der Supervisor und mit ihm die Zugriffsüberwachung ordnungsgemäss funktionieren. Bei Ausbleiben des genannten Signals während mehr als einer Periode wird ein Fehler- oder Alarmsignal ausgelöst.

Ein zusätzlicher Schutz vor unstatthaftem Zugriff kann dadurch erreicht werden, dass jeder Busteilnehmer die Absenderadresse SA jedes auf dem Bus übermittelten, nicht von ihm selbst stammenden Telegramms mit seiner eigenen Adresse vergleicht und bei festgestellter Uebereinstimmung z.B. ein Löschtelegramm aussendet; um das betreffende Telegramm bei festgestellter Adressgleichheit unwirksam zu machen, bestehen seitens der Busteilnehmer im wesentlichen die gleichen Möglichkeiten wie weiter oben im Zusammenhang mit dem Supervisor SV beschrieben. Damit kann verhindert werden, dass ein Busteilnehmer als seine Absenderadresse SA unbefugt die Adresse eines anderen Busteilnehmers verwendet, für den der beabsichtigte Zugriff zulässig wäre. Ist ferner in der Zugriffstabelle des Supervisors SV jeder Busteilnehmer bzw. seine Adresse mindestens einmal aufgelistet, so kann der Supervisor SV ein Löschtelegramm auch dann aussenden, wenn die Absenderadresse SA eines übermittelten Telegramms keinem der eingetragenen, "legalen" Busteilnehmer entspricht. Durch diese Massnahmen ist auf einfache Weise vollständig sichergestellt, dass Telegramme nur von "legalen", in der Liste eingetragenen Busteilnehmern mit deren eigenen Absenderadresse erfolgreich übermittelt werden können (Authentizitätskontrolle).

**Patentansprüche**

1. Verfahren zur Zugriffsüberwachung und zum Zugriffsschutz in Kommunikationsnetzwerken (LAN), wobei über das Netzwerk Informationen in Form von Telegrammen übertragen werden und ein bestimmter Teil der im Telegramm enthaltenen Information für die Ueberprüfung des Zugriffsrechtes auf den Telegrammempfänger verwendet wird, dadurch **gekennzeichnet**,
   - dass der Telegrammverkehr im gesamten Netzwerk von einer zentralen Ueberwachungseinrichtung (SV) ständig abgehört wird,
   - dass in der zentralen Ueberwachungseinrichtung (SV) eine Tabelle für die Ueberprüfung der Zugriffsrechte gespeichert ist, und
   - dass bei Auftreten eines Telegrammes die zentrale Ueberwachungseinrichtung (SV) anhand des bestimmten Teiles der im Telegramm enthaltenen Information und von Daten der Tabelle das Zugriffsrecht des Telegrammabsenders (SE) auf den Telegrammempfänger (AK) überprüft und im Falle des unstatthaften Zugriffes veranlasst, dass das Telegramm unwirksam gemacht wird.

2. Verfahren nach Anspruch 1, dadurch gekennzeichnet,
   - dass ein Telegrammempfänger (AK) mit der Ausführung einer mittels eines Telegrammes geforderten Aktion eine bestimmte, vorgegebene Zeit wartet,
   - dass die zentrale Ueberwachungseinrichtung (SV) während dieser Zeit die Ueberprüfung des Zugriffsrechtes durchführt,
   - dass die zentrale Ueberwachungseinrichtung (SV) im Falle eines korrekten, erlaubten Zugriffsversuches nicht aktiv wird, wobei nach Ablauf der Wartezeit der Telegrammempfänger die geforderte Aktion ohne anderweitige Intervention ausführen kann, und
   - dass die zentrale Ueberwachungseinrichtung (SV) im Falle einer Verletzung des Zugriffsrechtes ein Löschtelegramm sendet, woraufhin der Telegrammempfänger die geforderte Aktion nicht durchführt.

3. Verfahren nach Anspruch 2, dadurch gekennzeichnet, dass die Ueberprüfung des Zugriffsrechtes durch die zentrale Ueberwachungseinrichtung (SV) schon während der Telegrammübermittlung beginnt.

4. Verfahren nach Anspruch 3, dadurch gekennzeichnet, dass die Ueberprüfung nach Empfang der Absenderadresse (SA) beginnt, wobei ein Telegramm sich aus einem Kontrollfeld (CF), einer Absenderadresse (SA), einer Empfängeradresse (DA), einer Länge (L), einem Datenfeld (Data) und einem Prüfbyte (FCS) zusammensetzt.

5. Verfahren nach Anspruch 4, dadurch gekennzeichnet,
   - dass die in der zentralen Ueberwachungseinrichtung (SV) gespeicherte Tabelle in der gleichen Reihenfolge wie die Telegrammfelder organisiert ist,
   - dass schon bei Empfang der Absenderadresse (SA) die globale Zugriffsberechtigung überprüft wird,
   - dass beim nachfolgenden Empfang der Empfängeradresse (DA) bereits die Empfänger-Zugriffsberechtigung überprüft wird, und
   - dass anschliessend nach Empfang des Datenfeldes (Data) die Art der angeforderten Aktion überprüft wird.

6. Verfahren nach Anspruch 2, dadurch gekennzeichnet, dass das Löschtelegramm sich aus einem Kontrollfeld (CF) und einem Prüfbyte (FCS) zusammensetzt.

7. Verfahren nach Anspruch 1, dadurch gekennzeichnet, dass die Ueberprüfung des Zugriffsrechtes durch die zentrale Ueberwachungseinrichtung (SV) schon während der Telegrammübermittlung beginnt und noch vor Ende des Telegramms beendigt wird, und dass im Falle des unstatthaften Zugriffes die zentrale Ueberwachungseinrichtung (SV) auf das noch laufende Telegramm zur Sicherstellung von dessen Unwirksamkeit einwirkt.

8. Verfahren nach Anspruch 7, dadurch gekennzeichnet, dass die zentrale Ueberwachungseinrichtung (SV) im noch laufenden Telegramm einen Fehler simuliert, um dessen Wiederholung auszulösen.

9. Verfahren nach Anspruch 7, dadurch gekennzeichnet, dass die zentrale Ueberwachungseinrichtung (SV) im noch laufenden Telegramm eine durch Definition festgelegte Teilinformation verändert, wobei die Erkennung der Veränderung im Telegrammempfänger das Telegramm unwirksam macht.

10. Verfahren nach Anspruch 4, dadurch gekennzeichnet, dass jeder Kommunikationsteilnehmer die Absenderadresse (SA) der auf dem Netzwerk übermittelten, nicht von ihm selbst gesendeten Telegramme mit der eigenen Adresse vergleicht und bei Gleichheit veranlasst, dass das Telegramm unwirksam gemacht wird.

11. Verfahren nach den Ansprüchen 2 und 10, dadurch gekennzeichnet,
    - dass der Adressvergleich während der genannten, vorgegebenen Zeit durchgeführt wird, und
    - dass der eine Adressgleichheit feststellende Kommunikationsteilnehmer ein Löschtelegramm sendet, woraufhin der Telegrammempfänger die geforderte Aktion nicht durchführt.

12. Verfahren nach Anspruch 11, dadurch gekennzeichnet, dass der Adressvergleich durch die Kommunkationsteilnehmer schon während der Telegrammübermittlung beginnt.

13. Verfahren nach Anspruch 12, dadurch gekennzeichnet, dass der Adressvergleich bereits während oder unmittelbar nach dem Empfang der Absenderadresse (SA) beginnt, wobei ein Telegramm sich aus einem Kontrollfeld (CF), der Absenderadresse (SA), einer Empfängeradresse (DA), einer Länge (L), einem Datenfeld (Data) und einem Prüfbyte (FCS) zusammensetzt.

14. Verfahren nach den Ansprüchen 7 und 10, dadurch gekennzeichnet, dass der Adressvergleich schon während der Telegrammübermittlung beginnt und noch vor Ende des Telegramms beendigt wird, und dass der eine Adressgleichheit feststellende Kommunikationspartner auf das noch laufende Telegramm zur Sicherstellung von dessen Unwirksamkeit einwirkt.

15. Verfahren nach Anspruch 14, dadurch gekennzeichnet, dass der betreffende Kommunikationspartner im noch laufenden Telegramm einen Fehler simuliert, um dessen Wiederholung auszulösen.

16. Verfahren nach Anspruch 14, dadurch gekennzeichnet, dass der betreffende Kommunikationspartner im noch laufenden Telegramm eine durch Definition festgelegte Teilinformation verändert, wobei die Erkennung der Veränderung im Telegrammempfänger das Telegramm unwirksam macht.

17. Verfahren nach Anspruch 1, dadurch gekennzeichnet, dass die Ueberwachungseinrichtung periodisch ein das ordnungsgemässe Funktionieren der Ueberwachungseinheit bestätigendes Signal an alle Kommunikationspartner sendet.

18. Einrichtung zur Durchführung des Verfahrens zur Zugriffsüberwachung und zum Zugriffsschutz in Kommunikationsnetzwerken (LAN) nach Anspruch 1, aufweisend intelligente elektronische Systeme (SE, AK) die über einen Bus (BU) eines Kommunikationsnetzwerkes (LAN) verbunden sind, und wobei diese elektronischen Systeme Telegramme aussendende Sensoren (SE) und Telegramme empfangende Aktuatoren (AK) umfassen und wobei diese Telegramme Informationen enthalten deren einer Teil zur Ueberprüfung der Zugriffsberechtigung auf die Aktuatoren (AK) geeignet ist, dadurch **gekennzeichnet**,
    - dass eine zentrale Ueberwachungseinheit (SV) vorgesehen ist, über die der Telegrammverkehr ständig abhörbar ist,
    - die zentrale Ueberwachungseinheit (SV) Speichermittel aufweist, in welchen eine Tabelle für die Ueberprüfung der Zugriffsrechte speicherbar ist,
    - die zentrale Ueberwachungseinheit (SV) Prüfmittel aufweist, um bei Auftreten eines Telegrammes mithilfe der Tabelle und der in diesem Telegramm enthaltenen Information das Zugriffsrecht überprüft und im Falle des Nichtvorliegens der Zugriffsberechtigung dieses unwirksam macht.

19. Einrichtung nach Anspruch 18, dadurch gekennzeichnet, dass die Bus-Anschlüsse der intelligenten elektronischen Systeme (SE, AK) und der zentralen Ueberwachungseinrichtung (SV) über den Bus (BU) in einer "wired or"-Verknüpfung (oder-Verknüpfung auf den Bus, mit einer beliebigen Anzahl Ausgängen mit offenem Kollektor) verbunden sind.

20. Einrichtung nach Anspruch 18, dadurch gekennzeichnet, dass ein universelles Bedienungsgerät (PC) vorgesehen ist, das über einen Buskoppler (PC/BC) mit dem Bus (BU) in Verbindung steht.

## Claims

1. Method for monitoring access and access protection in communication networks (LAN), information being transmitted via the network in the form of messages and a certain part of the information contained in the message being used for checking the right of access to the message receiver, characterized
   - in that the message traffic throughout the network is constantly monitored by a central monitoring device (SV),
   - in that a table for checking the rights of access is stored in the central monitoring device (SV), and
   - in that, when a message occurs, the central monitoring device (SV) checks from the certain part of the information contained in the message and from data of the table the right of access of the message sender (SE) to the message receiver (AK) and, in the event of unauthorized access, causes the message to be invalidated.

2. Method according to Claim 1, characterized
   - in that a message receiver (AK) waits with the execution of an action requested by means of a message for a certain, predetermined time,
   - in that, during this time, the central monitoring device (SV) carries out the checking of the right of access,
   - in that, in the event of a correct, authorized access attempt, the central monitoring device (SV) does not become active, the message receiver being able to execute the requested action without other intervention once the waiting time has elapsed, and
   - in that, in the event of a violation of the right of access, the central monitoring device (SV) sends a cancel message, whereupon the message receiver does not carry out the requested action.

3. Message according to Claim 2, characterized in that the checking of the right of access by the central monitoring device (SV) begins already during message transmission.

4. Method according to Claim 3, characterized in that the checking begins after reception of the sender address (SA), a message being composed of a control field (CF), a sender address (SA), a receiver address (DA), a length (L), a data field (Data) and a check byte (FCS).

5. Method according to Claim 4, characterized
   - in that the table stored in the central monitoring device (SV) is organized in the same sequence as the message fields,
   - in that the global access authorization is checked already upon reception of the sender address (SA),
   - in that, upon subsequent reception of the receiver address (DA), the receiver access authorization is already checked, and
   - in that subsequently, after reception of the data field (Data), the type of action requested is checked.

6. Method according to Claim 2, characterized in that the cancel message is composed of a control field (CF) and a check byte (FCS).

7. Method according to Claim 1, characterized in that the checking of the right of access by the central monitoring device (SV) begins already during message transmission and is ended even before the end of the message, and in that, in the event of unauthorized access, the central monitoring device (SV) acts on the still continuing message to ensure it is invalidated.

8. Method according to Claim 7, characterized in that the central monitoring device (SV) simulates an error in the still continuing message in order to initiate repetition thereof.

9. Method according to Claim 7, characterized in that the central monitoring device (SV) changes in the still continuing message a part of the information specified by definition, the detection of the change in the message receiver invalidating the message.

10. Method according to Claim 4, characterized in that each communication subscriber compares the sender address (SA) of the messages transmitted on the network and not sent by himself with his own address and, if they match, arranges for the message to be invalidated.

11. Method according to Claims 2 and 10, characterized
    - in that the address comparison is carried out during the said, predetermined time, and
    - in that the communication subscriber establishing an address match sends a cancel message, whereupon the message receiver does not carry out the requested action.

12. Method according to Claim 11, characterized in that the address comparison by the communication subscribers begins already during message transmission.

13. Message according to Claim 12, characterized in that the address comparison begins already during or immediately after reception of the sender address (SA), a message being composed of a control field (CF), the sender address (SA), a receiver address (DA), a length (L), a data field (Data) and a check byte (FCS).

14. Method according to Claims 7 and 10, characterized in that the address comparison begins already during message transmission and is ended even before the end of the message, and in that the communication party establishing an address match acts on the still continuing message to ensure it is invalidated.

15. Method according to Claim 14, characterized in that the communication party concerned simulates an error in the still continuing message in order to initiate repetition thereof.

16. Method according to Claim 14, characterized in that the communication party concerned changes in the still continuing message a part of the information specified by definition, detection of the change in the message receiver invalidating the message.

17. Method according to Claim 1, characterized in that the monitoring device periodically sends to all the communication parties a signal confirming the proper functioning of the monitoring unit.

18. Apparatus for carrying out the method for monitoring access and access protection in communication networks (LAN) according to Claim 1, having intelligent electronic systems (SE, AK) which are connected via a bus (BU) of a communication network (LAN), and these electronic systems comprising sensors (SE) emitting messages and actuators (AK) receiving messages, and these messages containing information of which one part is suitable for checking the access authorization to the actuators (AK), characterized
    - in that a central monitoring unit (SV) is provided, by means of which the message traffic can be constantly monitored,
    - the central monitoring unit (SV) has storing means, in which a table for checking the rights of access can be stored,
    - the central monitoring unit (SV) has checking means in order to check when a message occurs the right of access by using the table and the information contained in this message and, in the event of a lack of access authorization, invalidates the said message.

19. Apparatus according to Claim 18, characterized in that the bus terminals of the intelligent electronic systems (SE, AK) and the central monitoring device (SV) are connected via the bus (BU) in a "wired or" circuit (or circuit to the bus, with any number of outputs with open collector).

20. Apparatus according to Claim 18, characterized in that a universal operator device (PC) is provided, which is in connection with the bus (BU) via a bus coupler (PC/BC).


**Revendications**

1. Procédé pour la surveillance et la protection d'accès dans les réseaux de communication (LAN), des informations étant transmises par le réseau sous forme de télégrammes et une partie déterminée de l'information contenue dans le télégramme étant utilisée pour le contrôle du droit d'accès sur le récepteur du télégramme, caractérisé en ce que
    - le trafic des télégrammes dans l'ensemble du réseau est continuellement écouté par un dispositif central de contrôle (SV),
    - dans le dispositif central de contrôle (SV) est mémorisée une table pour le contrôle du droit d'accès, et
    - à l'arrivée d'un télégramme, le dispositif central de surveillance (SV) contrôle, à l'aide de la partie déterminée de l'information contenue dans le télégramme et à partir des données des tables, le droit d'accès de l'émetteur du télégramme (SE) au récepteur de télégramme (AK), et fait en sorte que le télégramme soit annulé en cas d'accès non autorisé.

2. Procédé selon la revendicaton 1, caractérisé en ce que:
- un récepteur de télégramme (AK) attend un temps prédéterminé pour l'exécution d'une action demandée à l'aide d'un télégramme,
- le dispositif central de surveillance (SV) exécute pendant ce temps le contrôle du droit d'accès,
- le dispositif central de surveillance (SV) n'intervient pas dans le cas d'un commencement d'accès correct et autorisé, le récepteur du télégramme pouvant exécuter l'action demandée sans autre intervention, après le temps d'attente, et
- le dispositif central de surveillance émet un télégramme d'annulation en cas de violation du droit d'accès, à la suite de quoi le récepteur du télégramme n'exécute pas l'action demandée.

3. Procédé selon la revendication 2, caractérisé en ce que le contrôle du droit d'accès par le dispositif central de surveillance (SV) commence déjà pendant la transmission du télégramme.

4. Procédé selon la revendication 3, caractérisé en ce que le contrôle commence après réception de l'adresse de source (SA), un télégramme se composant d'un champ de contrôle (CF), d'une adresse de source (SA), d'une adresse de destinataire (DA), d'une longueur (L), d'un champ de données (Data) et d'un multiplet de contrôle (FCS).

5. Procédé selon la revendication 4, caractérisé en ce que:
- la table mémorisée dans le dispositif central de surveillance est organisée dans le même ordre que les champs de télégramme,
- le droit à l'accès global est déjà contrôlé à la réception de l'adresse de source,
- le droit à l'accès de la destination est déjà contrôlé à la prochaine réception de l'adresse de destination (DA) et
- ensuite, la nature de l'action demandée est contrôlée après réception du champ de données (Data).

6. Procédé selon la revendication 2, caractérisé en ce que le télégramme d'annulation se compose d'un champ de contrôle (CF) et d'un multiplet de contrôle (FCS).

7. Procédé selon la revendication 1, caractérisé en ce que le contrôle du droit d'accès est commencé par le dispositif central de surveillance (SV) déjà pendant la transmission du télégramme et est terminé encore avant la fin du télégramme, et que, dans le cas d'un accès non autorisé, le dispositif central de surveillance (SV) agit sur le télégramme encore en cours afin d'assurer sa nullité.

8. Procédé selon la revendication 7, caractérisé en ce que le dispositif central de surveillance (SV) simule une erreur dans le télégramme encore en cours pour provoquer sa répétition.

9. Procédé selon la revendication 7, caractérisé en ce que le dispositif central de surveillance (SV) modifie, dans le télégramme encore en cours, une information partielle déterminée par définition, la reconnaisance de la modification dans le récepteur du télégramme entraînant la nullité de ce dernier.

10. Procédé selon revendication 4, caractérisé en ce que le participant à la communication compare l'adresse de source (SA) des télégrammes transmis sur le réseau, et non, émis par lui-même, avec sa propre adresse et, en cas d'égalité, fait en sorte que le télégramme soit rendu nul.

11. Procédé selon les revendications 2 et 10, caractérisé en ce que la comparaison de l'adresse est exécutée pendant le temps connu et donné, et que le participant à la communication, constatant une égalité d'adresse, émet un téléaramme d'annulation, le récepteur de télégramme n'exécutant ensuite pas l'action demandée.

12. Procédé selon la revendication 11, caractérisé en ce que la comparaison d'adresses par le participant à la communication commence déjà pendant la transmission du télégramme.

13. Procédé selon la revendication 12, caractérisé en ce que la comparaison d'adresses commence déjà pendant la réception de l'adresse de source (SA) ou immédiatement après, le télégramme se composant d'un champ de controle (CF), de l'adresse de source (SA), d'une adresse de destinataire (DA), d'une longueur (L), d'un champ de données (Data) et d'un multiplet de contrôle (FCS).

14. Procédé selon les revendications 7 et 10, caractérisé en ce que la comparaison de l'adresse commence déjà pendant la transmission du télégramme et est terminée encore avant la fin du télégramme, et que le partenaire de la communication, constatant une égalité d'adresse, agit sur le télégramme encore en cours afin d'assurer sa nullité.

15. Procédé selon la revendication 4, caractérisé en ce que le partenaire de la communication concerné simule une erreur dans le télégramme encore en cours pour provoquer sa répétition.

16. Procédé selon la revendication 14, caractérisé en ce que le partenaire de la communication concerné modifie une information partielle, déterminée par définition dans le télégramme encore en cours, la reconnaissance de la modification dans le récepteur du télégramme entraînant la nullité de ce dernier.

17. Procédé selon la revendication 1, caractérisé en ce que le dispositif de surveillance émet périodiquement, à tous les partenaires de la communication, un signal confirmant le fonctionnement convenable de l'unité de surveillance.

18. Dispositif pour la mise en oeuvre du procédé destiné à la surveillance et la protection des accès dans les réseaux de communication (LAN) selon la revendicaion 1, présentant des systèmes électroniques intelligents (SE,AK) liés par un bus (BU) d'un réseau de communication (LAN), et ces systèmes électroniques comprenat des Capteurs (SE) émettant des télégrammes et des actionneurs les rececant, et ces télégrammes contenant des informations dont une partie est propre au contrôle du droit à l'accès aux actionneurs (AK), caractérisé en ce que:
   - une unité de surveillance centrale (SV), sur laquelle on peut continuellement écouter la circulation des télégrammes, est prévue,
   - l'unité de surveillance centrale (SV) présente des moyens de mémoire dans lesquels une table pour le contrôle des droits d'accès est mémorisable,
   - l'unité de surveillance centrale (SV) comporte des moyens de contrôle permettant, à l'arrivée d'un télégramme, de vérifier le droit d'accès à l'aide de la table et de l'information contenue dans ce télégramme, et d'entraîner sa nullité en cas de non existance de droit à l'accès.

19. Dispositif selon la revendication 18, caractérisé en ce que les connexions de bus des systèmes électroniques intelligents (SE,AK) et du dispositif central de surveillance (SV) sont liées par le bus (BU) par une liaison "ou câblée" (liaison ou sur le bus avec un nombre quelconque de sorties avec collecteur ouvert).

20. Dispositif selon la revendication 18, caractérisé en ce qu'un matériel courant (PC), en liaison avec le bus (BU) par un coupleur de bus (PC/BC), est prévu.

Fig. 1

Fig. 2

*Fig. 3a*

| : S1 | D0 | D1 | D2 | D3 | D4 | D5 | D6 | D7 | PB | S2 |
|---|---|---|---|---|---|---|---|---|---|---|

‹-t0-›

*Fig. 3b*

| Ch1 | Ch2 | Ch3 | Ch4 | | Chn |
|---|---|---|---|---|---|

‹-t1-› | Ack | ‹—— t2 ——›

| Ch1 | Ch2 | Ch3 |
|---|---|---|

Telegramm 1 ——————————

Telegramm 2 ——————————

*Telegrammpaket* ——————————

*Fig. 3c*

| CF | SA | DA | L | Data | FCS |
|---|---|---|---|---|---|

‹-t1-› | Ack | ‹—— t2 ——›

| CF | SA | DA |
|---|---|---|

Telegramm 1 ——————————

Telegramm 2 ——————————

*Telegrammpaket* ——————————

*Fig. 3d*

| CF | SA | DA | L | Data | FCS | ACC |
|---|---|---|---|---|---|---|

‹-t1-› | Ack |

Telegramm 1 ——————————

| S1 | x | x | x | x | x | x | 1 | 1 | PB | S2 |
|---|---|---|---|---|---|---|---|---|---|---|

14

## Fig. 4a

## Fig. 4b

Start

Wird
Tg empfangen? — nein

ja

SA
vollstaendig
empfangen? — nein

ja

springe in Zugriffstabelle
zur Ueberpruefung der
Sourceadresse

globaler
Zutritt moeglich? — nein → Cancel

ja

DA
vollstaendig
empfangen? — nein

ja

springe in Zugriffstabelle
zur Ueberpruefung der Empfaenger
Zutrittsberechtigung

Alle
Tg Empfaenger
ansprechbar? — nein → Cancel

ja

1

*Fig. 5a*

*Fig. 5b*

Fig. 6

Fig. 7a

Fig. 7b

PC

PC/BC sendet

AK empfaengt

SV sendet

SV empfaengt